# EUROPEAN PATENT SPECIFICATION

(11) **EP 3 747 949 B1**
(45) Date of publication and mention of the grant of the patent: **04.12.2024**
(21) Application number: 18904388.8
(22) Date of filing: 14.12.2018
(51) Int. Cl.: C08L 75/04, C08L 75/08, C08G 18/48, C08G 18/78, C08K 5/544, C08G 18/73, C08G 18/75, C08K 5/00, C08K 5/49, C08G 18/28, C08G 18/72, C08G 18/76, C08G 18/79

(54) **POLYURETHANE RESIN COMPOSITION**
POLYURETHANHARZZUSAMMENSETZUNG
COMPOSITION DE RÉSINE DE POLYURÉTHANE

(30) Priority: 30.01.2018 KR 20180011509
(43) Date of publication of application: 09.12.2020
(73) Proprietor: KCC Corporation, Seoul 06608 (KR)
(72) Inventor: LEE, Jeong Hyun, Wanju-Gun, Jeollabuk-do 55317 (KR); LEE, Jae Young, Ulsan 44459 (KR); KIM, Byong Su, Ulsan 44536 (KR); KWON, Jin Wook, Ulsan 44261 (KR)
(74) Representative: Cabinet Laurent & Charras
(86) International application number: PCT/KR2018/015959
(87) International publication number: WO 2019/151641

(56) References cited:
- WO-A1-2017/014185
- KR-A- 20030 057 384
- KR-A- 20050 062 421
- KR-A- 20090 019 798
- KR-B1- 100 285 097
- US-A1- 2014 290 855

## Description

### TECHNICAL FIELD

The present invention relates to a 1-component polyurethane resin composition used as an adhesive.

### BACKGROUND ART

In general, a polyurethane resin has a urethane bond in the molecules thereof, and is excellent in abrasion resistance, oil resistance, solvent resistance, and the like, and is used in various fields such as adhesives, injection molding, ink, paint, and foam.

Examples of cases in which such a polyurethane resin is used as an adhesive may include cases of bonding a substrate such as glass on a painted surface of an automobile body. However, a typical polyurethane resin has poor adhesiveness to a painted surface of an automobile body, and thus, a primer is first applied on the painted surface and then a polyurethane resin is applied thereon (or a polyurethane resin is first applied, and then the primer is applied again thereon), followed by adhering a substrate such as glass thereto. Since a primer application process is essentially required as described above, when a typical polyurethane resin is used, there is a problem in that a process of adhering a substrate such as glass on a painted surface of an automobile body becomes complicated.

In addition, a typical polyurethane resin has short pot life, so that the workability thereof is poor, and the adhesiveness thereof at low temperatures is also poor, so that there is a problem in that an environment in which the polyurethane resin is used is limited.

### [Prior Art Document]

Korean Patent Laid-open Publication No. 2009-0019798

### DISCLOSURE OF THE INVENTION

### TECHNICAL PROBLEM

An aspect of the present invention provides a polyurethane resin which is excellent in adhesiveness in a wide temperature range and capable of securing sufficient pot life.

### TECHNICAL SOLUTION

According to an aspect of the present invention, provided is a polyurethane resin composition comprising a urethane resin, an adhesive resin obtained by reacting an aminoalkoxy silane-based compound and a biuret body bonded with isocyanate, and a first plasticizer, wherein in the reaction, the aminoalkoxy silane-based compound is used in an amount of 5 to 8 parts by weight based on 100 parts by weight of the polyurethane resin composition.

### ADVANTAGEOUS EFFECTS

A polyurethane resin composition of the present invention is excellent in adhesiveness in a wide temperature range (for example, 5°C to 35 °C), and also excellent in workability since sufficient pot life is secured. Particularly, when the polyurethane resin composition of the present invention is used as an adhesive (sealant) for adhering a substrate such as glass to a painted surface of an automobile body, an excellent adhesive effect may be achieved without applying a primer on the painted surface of the automobile body and/or a glass surface.

### BEST MODE FOR CARRYING OUT THE INVENTION

The polyurethane resin composition of the present invention characterized in that an excellent adhesive effect may be achieved by including a specific adhesive resin, as described in detail below.

The polyurethane resin composition of the present invention includes a urethane resin, an adhesive resin, and a first plasticizer.

The urethane resin included in the polyurethane resin composition of the present invention may be a urethane prepolymer obtained by a reaction of a polyol compound and a polyisocyanate compound.

The polyol compound may be one or more selected from the group consisting of polyethylene glycol, polypropylene glycol, polytetramethylene glycol, and polypropylene triol. The weight average molecular weight (g/mol) of the polyol compound may be 500 to 10,000, specifically 2,000 to 5,000.

The polyisocyanate compound may be one or more selected from the group consisting of 2,4-toluene diisocyanate (2,4-TDI), 2,6-toluene diisocyanate (2,6-TDI), 4,4'-diphenylmethylene diisocyanate (4,4'-MDI), 2,4'-diphenylmethylene diisocyanate (2,4'-MDI), 1,4-phenylene diisocyanate, 1,5-naphthalene diisocyanate, ethylene diisocyanate, propylene diisocyanate, tetramethylene diisocyanate, hexamethylene diisocyanate, isophorone diisocyanate, and the like.

In the reaction of a polyol compound and a polyisocyanate compound, a third plasticizer may be used. Specific examples of the third plasticizer may be dioctyl phthalate, dibutyl phthalate, dioctyl adipate, diisodecyl phthalate, diisononyl phthalate, or a mixture thereof.

The weight average molecular weight of the urethane resin may be 2,500 to 15,000 considering the viscosity, flexibility, and the like of the polyurethane resin composition.

In addition, the content of the urethane resin may be 25 to 70 parts by weight on the basis of 100 parts by weight of the polyurethane resin composition. When the content of the urethane resin is out of the above range, the flexibility, heat resistance, and the like of the polyurethane resin composition may be deteriorated.

The adhesive resin included in the polyurethane resin composition of the present invention may be a silane-based resin obtained by reacting an aminoalkoxy silane-based compound and a biuret body bonded with isocyanate.

The biuret body bonded with isocyanate may mean a self-condensation product in which an isocyanate monomer is self-condensed to have a biuret bond.

The aminoalkoxy silane-based compound may be one or more selected from the group consisting of bis(trialkoxysilylpropyl)amine, N-2-(aminoethyl)-3-aminopropylmethyldimethoxysilane, N-2-(aminoethyl)-3-aminopropyltrimethoxysilane, 3-aminopropyltrimethoxysilane, 3-aminopropyltriethoxysilane, N-phenyl-3-aminopropyltrimethoxysilane, N-phenyl-gamma-aminopropyltrimethoxysilane, and 3-aminopropyltriethoxysilane. At this time, the bis(trialkoxysilylpropyl)amine may specifically be one or more selected from the group consisting of bis(trimethoxysilylpropyl)amine, bis(triethoxysilylpropyl)amine, and bis(tripropoxysilylpropyl)amine.

Here, the present invention may provide a polyurethane resin composition having excellent adhesiveness (particularly, low-temperature adhesiveness) by, when reacting an aminoalkoxy silane-based compound to the biuret body, allowing the usage amount thereof to be relatively large to prepare an adhesive resin, and introducing the prepared adhesive resin into the polyurethane resin composition. Specifically, the aminoalkoxy silane-based compound may be used in an amount of 5 to 8 parts by weight based on 100 parts by weight of the polyurethane resin composition.

The isocyanate bonded to the biuret body may include one or more selected from the group consisting of hexamethylene diisocyanate, cyclopentylene-1,3-diisocyanate, cyclohexylene-1,2-diisocyanate, hexahydroxylylene diisocyanate, dicyclohexyl-4,4-diisocyanate, 1-methyl-2,4-diisocyanatocyclohexane, 1-methyl-2,6-diisocyanatocyclohexane, bis(4-isocyanatocyclohexyl)methane, 1,4-diisocyanatocyclohexane, and 1,3-diisocyanatocyclohexane. Specifically, the biuret body may be 1,3,5-tris(6-isocyanatohexyl)biuret

Here, the reaction ratio of the aminoalkoxy silane-based compound and the biuret body may be a weight ratio of 1:0.65 to 1.06 considering the physical properties of the adhesive resin.

Meanwhile, a second plasticizer may be added in the process of obtaining an adhesive resin by reacting the aminoalkoxy silane-based compound with the biuret body. Specific examples of the second plasticizer may be dioctyl phthalate, dibutyl phthalate, dioctyl adipate, diisodecyl phthalate, diisononyl phthalate, or a mixture thereof.

The content of the adhesive resin obtained as described above may be 9 to 20 parts by weight based on 100 parts by weight of the polyurethane resin composition. When the content of the adhesive resin is out of the above range, the adhesiveness, crosslinking, and the like of the polyurethane resin composition may be deteriorated.

The first plasticizer included in the polyurethane resin composition of the present invention is to impart flexibility, elasticity, and the like to the polyurethane resin composition, and may be one or more selected from the group consisting of a phthalate-based plasticizer and a phosphate-based plasticizer.

The phthalate-based plasticizer may be one or more selected from the group consisting of di-butyl phthalate, di-2-ethylhexyl phthalate, di-isononyl phthalate, di-isodecyl phthalate, and butylbenzyl phthalate. The phosphate-based plasticizer may be one or more selected from the group consisting of 2-ethylhexyl diphenyl phosphate, tri-cresyl phosphate, and cresyldiphenyl phosphate. Here, in order to further increase the flexibility and plasticity as well as thermal stability of the polyurethane resin composition, a mixture of diisononyl phthalate and 2-ethylhexyldiphenyl phosphate may be used as the first plasticizer.

The content of the first plasticizer may be 3 to 15 parts by weight based on 100 parts by weight of the polyurethane resin composition. When the content of the first plasticizer is out of the above range, the flexibility, plasticity, and the like of the polyurethane resin composition may be deteriorated.

Meanwhile, the polyurethane resin composition of the present invention may further include one or more selected from the group consisting of a pigment, a catalyst, and an adhesion promoter in order to increase the physical properties of a coating film.

The pigment further included in the polyurethane resin composition of the present invention is to increase the strength of the coating film and impart color thereto. Specific examples thereof may include carbon black, calcium carbonate, titanium dioxide (TiO₂), iron oxide yellow, iron oxide red, and the like.

The content of the pigment may be 20 to 35 parts by weight based on 100 parts by weight of the polyurethane resin composition. When the content of the pigment is out of the above range, the strength of the coating film may be deteriorated, or it may be difficult to control the viscosity of the polyurethane resin composition and impart required color to the coating film.

The catalyst further included in the polyurethane resin composition of the present invention controls the reactivity of the polyurethane resin composition. The catalyst may be one or more selected from the group consisting of dimethyltin dioleate, dibutyltin dimaleate, dibutyltin dilaurate, dibutyltin diacetate, dibutyltin octanoate, dibutyltin mercaptide, dioctyltin dilaurate, dioctyltin mercaptide, dioctyltin dimaleate, 4,4'-(oxydi-2,1-ethanedyl)bismorpholine, and dimethyl-4-morpholine ethaneamine. Here, in order to optimize the curing reactivity of the polyurethane resin composition to secure sufficient pot life, a mixture of dibutyltin mercaptide and 4,4'-(oxydi-2,1-ethanedyl)bismorpholine may be used as the catalyst.

The content of the catalyst may be 0.001 to 0.5 parts by weight based on 100 parts by weight of the polyurethane resin composition. When the content of the catalyst is out of the above range, the curing reactivity of the polyurethane resin composition may be deteriorated or the pot life thereof may be shortened to deteriorated workability.

The adhesion promoter further included in the polyurethane resin composition of the present invention is to increase the adhesiveness of the coating film, and specific examples thereof may include 1,3,5-tris(6-isocyanatohexyl)biuret, and the like.

The content of the adhesion promoter may be 0.1 to 1 parts by weight based on 100 parts by weight of the polyurethane resin composition. When the content of the adhesion promoter is out of the above range, the physical properties of the coating film may be deteriorated or the economic feasibility of the polyurethane resin composition may be deteriorated.

In addition, the polyurethane resin composition of the present invention may further comprise a thickener commonly used to control the viscosity of a composition.

The polyurethane resin composition of the present invention described above includes an adhesive resin obtained by reacting a relatively high amount of the aminoalkoxy silane-based compound with a biuret body, and thus, is excellent in adhesiveness as well as hardness, strength, and the like. As such, the polyurethane resin composition of the present invention is excellent in adhesiveness, and thus, when used as an adhesive (sealant) for adhering a substrate such as glass to a painted surface of an automobile body, the substrate may be directly adhered to the painted surface as well as a glass surface without the application of a primer.

Hereinafter, the present invention will be described in detail through embodiments.

However, the following Examples are illustrative of the present invention.

### [Example 1]

### 1) Preparing urethane resin

Polypropylene glycol, di-isononyl phthalate, and polypropylene triol were added to a glass flask equipped with a stirrer, a condenser, and a thermometer and having a hose of a vacuum pump connected thereto, and then vacuum decompression was performed for 2 hours while gradually raising the temperature to 140°C. Next, after cooled to 60 °C or less, methylene diphenyl di-isocyanate (MDI) was added to the mixture to identify exotherm, and then the mixture was reacted such that the NCO wt% was to be 1.70 to 1.75 wt% while maintaining a temperature of 80 to 90°C. After the completion of the reaction, the mixture was cooled to 40°C to prepare a urethane resin having a viscosity (when measured at 25°C using a Brookfield Viscometer) of 8,400 cPs, an NCO wt% of 1.72 wt%, and a weight average molecular weight of 9,000.

### 2) Preparing adhesive resin

1,3,5-Tris(6-isocyanatohexyl)biuret and di-isononyl phthalate were added to a glass flask equipped with a stirrer, a condenser, and a thermometer and having a hose of a vacuum pump connected thereto, and then the mixture was stirred for 10 minutes. Next, bis(trimethoxysilylpropyl)amine) was dropped uniformly for 60 minutes. Thereafter, while maintaining the temperature not to exceed 50°C, an NCO wt% was measured every hour, and when the measured NCO wt% satisfied 3.0 to 3.5 wt%, the reaction was terminated. After the completion of the reaction, the mixture was cooled to 40°C to obtain an adhesive resin having a viscosity of 4,000 cPs and an NCO wt% of 3.1 wt%.

### 3) Preparing polyurethane resin composition

The urethane resin prepared above and di-isononyl phthalate which is a plasticizer were added to a mixer device having a vacuum pump made of an SUS material connected thereto, having a heatable jacket, and capable of high-viscosity rotational stirring and air-wall scrubbing, and stirring was performed while raising the temperature to 60°C. Next, carbon black was added thereto as a pigment, and the mixture was stirred for 20 minutes. Thereafter, decompression was performed for 10 minutes to a vacuum of less than 20 Torr to remove moisture. Then, 4,4'-(oxydi-2,1-ethanedyl) bismorpholine and dibutyl tin mercaptide as catalysts, 1,3,5-tris(6-isocyanatohexyl)biuret as an adhesion promoter, 2-ethylhexyl diphenyl phosphate as a plasticizer were added thereto and the mixture was stirred for 30 minutes to obtain a polyurethane resin composition having a viscosity of 16,600 cPs and an NCO wt% of 1.37 wt%. At this time, the composition of each component is as shown in Table 1 below.

### [Examples 2 to 4]

A polyurethane resin composition was prepared in the same manner as in Example 1 except that the composition of Table 1 below was applied.

### [Comparative Examples 1 to 5]

A polyurethane resin composition was prepared in the same manner as in Example 1 except that the composition of Table 2 below was applied.

**[Table 1]**

| Component | | Exam ple 1 | Exam ples 2 | Exam ples 3 | Exam ples 4 |
|---|---|---|---|---|---|
| Urethane resin | Polypropylene Glycol (Viscosity: 150-175 cPs, Mw: 2,000) | 114 | 114 | 114 | 114 |
| | diisononyl phthalate | 122 | 122 | 122 | 122 |
| | (Specific gravity: 0.971-0.981, Acid value: Max. 0.1 mgKOH/ g) | | | | |
| | PolyPropylene Triol (Viscosity: 850 cPs, Mw: 4,800, Specific gravity: 1.02) | 221 | 221 | 221 | 221 |
| | Methylene diphenyl diisocyanate(Mw: 250, NCO%: 33.6%, Specific gravity: 1.23) | 50 | 50 | 50 | 50 |
| First plasticizer | diisononyl phthalate (Specific gravity: 0.971-0.981, Acid value: Max. : 0.1 mgKOH/ g) | 54 | 93 | 73 | 73 |
| | 2-ethylhexyl diphenyl phosphate (Mw: 362, Specific gravity: 1.09) | 5.6 | 5.6 | 5.6 | 5.6 |
| Pigment | Carbon black (Oil absorption: 77-95%, Coloring power: 97-110) | 309 | 270 | 290 | 290 |
| Catalyst | 4,4'-(oxydi-2,1-ethanediyl)bismorphol ine) (Amine equivalent: 8.1 -8.5, Specific gravity: 1.06) | 1.3 | 1.3 | 1.3 | 1.3 |
| | Dibutyltin mercaptide (Mw: 635) | 0.1 | 0.1 | 0.1 | 0.1 |
| Adhesive resin | 1,3,5-tris (6-isocyanatohexyl)biure t (NCO wt%: 23.5 wt%, Viscosity: 2,000 cPs, Mw: 478) | 45 | 45 | 45 | 45 |
| | Aliphatic polyisocyanate (HDI trimer, Bayer N3300) (NCO wt%: 21.8 wt%, Viscosity: 3,000 mPa·s, Mw: 579) | - | - | - | - |
| | bis (trimethoxysilylpr opyl) amine (Exterior: | 58 | 58 | 58 | - |
| | Clear, liquid, Boiling point: 152°C, Specific gravity: 1.04) | | | | |
| | N-2-(Aminoethyl)-3-aminopropylmethoxysil ane (Exterior: Clear, liquid, Boiling point: 152°C, Specific gravity: 1.03) | - | - | - | 58 |
| | diisononyl phthalate) (Specific gravity: 0.971-0.981, Acid value: Max.: 0.1 mgKOH/ g) | 15 | 15 | 15 | 15 |
| Adhesion promoter | 1,3, 5-tris (6-isocyanatohexyl)biure t (NCO wt%: 23.5%, Viscosity: 2,000 cPs, Mw: 478) | 5 | 5 | 5 | 5 |
| Total (Unit: g) | | 1,00 0 | 1,00 0 | 1, 00 0 | 1,00 0 |

**[Table 2]**

| Component | | Comp arat ive Exam ple 1 | Comp arat ive Exam ple 2 | Comp arat ive Exam ple 3 | Comp arat ive Exam ple 4 | Comp arat ive Exam ple 5 |
|---|---|---|---|---|---|---|
| Urethane resin | PolyPropylene Glycol (Viscosity: 150-175 cPs, Mw: 2,000) | 132 | 127 | 123 | 118 | 113 |
| | diisononyl phthalate (Specific gravity: 0.971-0.981, Acid value: Max. : 0.1 mgKOH/g) | 141 | 136 | 131 | 126 | 120 |
| | PolyPropylene Triol (Viscosity: 850 cPs, Mw: 4,800, Specific gravity: 1.02) | 255 | 246 | 238 | 229 | 219 |
| | methylene diphenyl diisocyanate (Mw: 250, | 58 | 56 | 54 | 52 | 50 |
| | NCO wt%: 33.6 wt%, Specific gravity: 1.23) | | | | | |
| First plasticizer | diisononyl phthalate (Specific gravity: 0.971-0.981, Acid value: Max. : 0.1 mgKOH/g) | 54 | 54 | 54 | 54 | 54 |
| | 2-ethylhexyl diphenyl phosphate (Mw: 362, Specific gravity: 1.09) | 5.6 | 5.6 | 5.6 | 5.6 | 5.6 |
| Pigment | Carbon black (Oil absorption: 77-95%, Coloring power: 97-110) | 309 | 309 | 309 | 309 | 309 |
| Catalyst | 4,4'-(oxydi-2,1-ethanediyl)bismorpholi ne) (Amine equivalent: 8.1-8.5, Specific gravity: 1.06) | 1.3 | 1.3 | 1.3 | 1.3 | 1.3 |
| | dibutyltin mercaptide (Mw: 635) | 0.1 | 0.1 | 0.1 | 0.1 | 0.1 |
| Adhesive resin | 1,3,5-tris (6-isocyanatohexyl)biuret (NCO wt%: 23.5 wt%, Viscosity: 2,000 cPs, Mw: 478) | 15 | 23 | 30 | 38 | 30 |
| | bis (trimethoxysilylpro pyl)amine (Exterior: Clear, liquid, Boiling point: 152°C, Specific gravity: 1.04) | 19 | 29 | 39 | 49 | 85 |
| | diisononyl phthalate (Specific gravity: 0.971-0.981, Acid value: Max.: 0.1 mgKOH/g) | 5 | 8 | 10 | 13 | 8 |
| Adhesion promoter | 1,3,5-tris (6-isocyanatohexyl)biuret (NCO wt%: 23.5%, Viscosity: 2,000 cPs, Mw: 478) | 5 | 5 | 5 | 5 | 5 |
| Total (Unit: g) | | 1,00 0 | 1,00 0 | 1, 00 0 | 1,00 0 | 1,00 0 |

### [Experimental Examples]

The physical properties of the polyurethane resin composition prepared in each of Examples and Comparative Examples were evaluated as follows, and the results are shown in Tables 3 and Table 4, respectively.
1. Viscosity: The viscosity was measured using a Brookfield viscometer (Model name: DV2T for high viscosity measurement) at 60°C.
2. Specific gravity: The specific gravity was measured using a 100 cc specific gravity cup.
3. Solids: 1 g of a composition was spread evenly on an aluminum can having a diameter of 5 cm to measure the weight of the composition, and then was baked in a fan oven at 150°C for 15 minutes. The difference in weight between before and after the baking was recorded as a ratio.
4. Hardness: The composition was cured for one week to a thickness of 5 mm, and then the hardness thereof was measured using a Shore A hardness tester.
5. TFT: The composition was applied on a painted surface under the conditions of 20°C × 65% relative humidity and the time for which the sample is not smeared by a non-adhesive tape was measured in a minute unit.
6. Low-temperature adhesiveness: The composition was made into a specimen having a thickness of 5 mm, and then cured for 14 days under the conditions of 5°C × 50% relative humidity. Thereafter, the composition was cut with a knife to identify the adhesiveness to the painted surface, and the area of the composition attached to the painted surface was represented in %.
7. Knife Cut: The composition was applied on the painted surface, and then cured for 7 days under the conditions of 20°C × 65 % relative humidity. Thereafter, the composition was cut with a knife to identify the adhesiveness to the painted surface, and the area of the composition attached to the painted surface was represented in %.
8. Shear strength: The composition was made into a specimen of a dog-bone shape having a thickness of 5 mm to measure the shear strength of the composition using a universal testing machine (UTM).
9. Pot life: The composition was left to stand at intervals of 4 minutes, 5 minutes, and 6 minutes under the conditions of 35°C × 90% relative humidity, and then a specimen was prepared to measure the shortest and longest time during which no interface peeling occurs with a surface to be attached. The area of the coating film attached to the surface to be attached during the longest time was represented in %.

**[Table 3]**

| Physical properties | | Exampl e 1 | Example 2 | Example 3 | Exampl e 4 |
|---|---|---|---|---|---|
| Viscosity (cPs) | 60°C | 16,600 | 13,500 | 14,800 | 14,200 |
| Specific gravity | 20°C | 1.21 | 1.21 | 1.22 | 1.21 |
| Solids (wt%) | 150°C * 15 minutes | 99 | 99 | 99 | 99 |
| Hardness (Hs) | Shore A | 50 | 49 | 48 | 49 |
| TFT (minutes) | 20°C * 65%, 3 hr | 40 | 40 | 43 | 45 |
| Lower-temperature adhesiveness | 5 °C * 50%, 14 days | 100% | 90% | 95% | 95% |
| Knife Cut | 20°C | 100% | 95% | 95% | 95% |
| Shear strength (MPa) | 20°C * 650, 168 hr | 4.0 | 3.8 | 3.8 | 3.7 |
| 5 minutes of pot life | 20°C * 65% | 100% | 80% | 85% | 85% |
| | 35°C * 90% | 100% | 90% | 90% | 85% |

**[Table 4]**

| Physical properties | | Compara tive Example 1 | Compara tive Example 2 | Compara tive Example 3 | Compara tive Example 4 | Compara tive Example 5 |
|---|---|---|---|---|---|---|
| Viscosity (cPs) | 60°C | 17,200 | 16, 100 | 17,200 | 17,800 | 16, 800 |
| Specific gravity | 20°C | 1.21 | 1.21 | 1.23 | 1.21 | 1.21 |
| Solids (wt%) | 150°C * 15 minutes | 99 | 99 | 99 | 99 | 99 |
| Hardness (Hs) | Shore A | 58 | 55 | 52 | 49 | 46 |
| TFT (minutes) | 20°C * 65%, 3 hr | 48 | 43 | 41 | 38 | 52 |
| Lower-temperature adhesiveness | 5°C * 50%, 14 days | 30% | 40% | 65% | 50% | 20% |
| Knife Cut | 20°C | 40% | 40% | 55% | 77% | 30% |
| Shear strength (MPa) | 20°C * 650, 168 hr | 4.3 | 3.9 | 4.0 | 3.8 | 2.8 |
| 5 minutes of pot life | 20°C * 65% | 50% | 55% | 70% | 70% | 40% |
| | 35°C * 90% | 30% | 5% | 600 | 70% | 30% |

Referring to Table 3 and Table 4, it can be confirmed that the polyurethane resin composition according to the present invention has excellent low-temperature adhesiveness and secures sufficient pot life.

## Claims

1. A polyurethane resin composition comprising:
a urethane resin;
an adhesive resin obtained by reacting an aminoalkoxy silane-based compound and a biuret body bonded with isocyanate; and
a first plasticizer, wherein
in the reaction, the aminoalkoxy silane-based compound is included in 5 to 8 parts by weight based on 100 parts by weight of the polyurethane resin composition.

2. The polyurethane resin composition of claim 1, wherein the aminoalkoxy silane-based compound is one or more selected from the group consisting of bis(trialkoxysilylpropyl)amine, N-2-(aminoethyl)-3-aminopropylmethyldimethoxysilane, N-2-(aminoethyl)-3-aminopropyltrimethoxysilane, 3-aminopropyltrimethoxysilane, 3-aminopropyltriethoxysilane, N-phenyl-3-aminopropyltrimethoxysilane, N-phenyl-gamma-aminopropyltrimethoxysilane, and 3-aminopropyltriethoxysilane.

3. The polyurethane resin composition of claim 2, wherein the bis(trialkoxysilylpropyl)amine is one or more selected from the group consisting of bis(trimethoxysilylpropyl)amine, bis(triethoxysilylpropyl)amine, and bis(tripropoxysilylpropyl)amine.

4. The polyurethane resin composition of claim 1, wherein the isocyanate bonded to the biuret body includes one or more selected from the group consisting of hexamethylene diisocyanate, cyclopentylene-1,3-diisocyanate, cyclohexylene-1,2-diisocyanate, hexahydroxylylene diisocyanate, dicyclohexyl-4,4-diisocyanate, 1-methyl-2,4-diisocyanatocyclohexane, 1-methyl-2,6-diisocyanatocyclohexane, bis(4-isocyanatocyclohexyl)methane, 1,4-diisocyanatocyclohexane, and 1,3-diisocyanatocyclohexane.

5. The polyurethane resin composition of claim 1, wherein the biuret body is 1,3,5-tris(6-isocyanatohexyl)biuret.

6. The polyurethane resin composition of claim 1, wherein a second plasticizer is added to the reaction to obtain the adhesive resin.

7. The polyurethane resin composition of claim 1, further comprising one or more selected from the group consisting of a pigment, a catalyst, and an adhesion promoter.

8. The polyurethane resin composition of claim 7, wherein the catalyst is one or more selected from the group consisting of dimethyltin dioleate, dibutyltin dimaleate, dibutyltin dilaurate, dibutyltin diacetate, dibutyltin octanoate, dibutyltin mercaptide, dioctyltin dilaurate, dioctyltin mercaptide, dioctyltin dimaleate, 4,4'-(oxydi-2,1-ethanedyl)bismorpholine, and dimethyl-4-morpholine ethaneamine.

9. The polyurethane resin composition of claim 7, wherein, based on 100 parts by weight of the polyurethane resin composition,
25 to 70 parts by weight of the urethane resin;
9 to 20 parts by weight of the adhesive resin;
3 to 15 parts by weight of the first plasticizer;
20 to 35 parts by weight of the pigment;
0.001 to 0.5 parts by weight of the catalyst; and
0.1 to 1 part by weight of the adhesion promoter are included.

## Patentansprüche

1. Polyurethanharz-Zusammensetzung, die Folgendes umfasst:
ein Urethanharz;
ein Klebstoffharz, das erhalten wurde, indem eine Verbindung auf Basis von Aminoalkoxysilan und ein Biuret-Körper, welcher an Isocyanat gebunden ist, miteinander umgesetzt wurden; und
einen ersten Weichmacher, wobei
die Verbindung auf Basis von Aminoalkoxysilan zu 5 bis 8 Gewichtsteilen in die Umsetzung eingeht, bezogen auf 100 Gewichtsteile der Polyurethanharz-Zusammensetzung.

2. Polyurethanharz-Zusammensetzung nach Anspruch 1, wobei es sich bei der Verbindung auf Basis von Aminoalkoxysilan um eine oder mehrere handelt, die aus der Gruppe ausgewählt ist/sind, welche aus bis-(Trialkoxysilylpropyl)amin, N-2-(Aminoethyl)-3-aminopropylmethyldimethoxysilan, N-2-(Aminoethyl)-3-aminopropyltrimethoxysilan, 3-Aminopropyltrimethoxysilan, 3-Aminopropyltriethoxysilan, N-Phenyl-3-aminopropyltrimethoxysilan, N-Phenyl-gamma-aminopropyltrimethoxysilan und 3-Aminopropyltriethoxysilane besteht.

3. Polyurethanharz-Zusammensetzung nach Anspruch 2, wobei es sich bei dem bis-(Trialkoxysilylpropyl)amin um eines oder mehrere handelt, das/die aus der Gruppe ausgewählt ist/sind, welche aus bis-(Trimethoxysilylpropyl)amin, bis-(Triethoxysilylpropyl)amin und bis-(Tripropoxysilylpropyl)amin besteht.

4. Polyurethanharz-Zusammensetzung nach Anspruch 1, wobei es sich bei dem Biuret-Körper, welcher an Isocyanat gebunden ist, um einen oder mehrere handelt, der/die aus der Gruppe ausgewählt ist/sind, welche aus Hexamethylendiisocyanat, Cyclopentylen-1,3-diisocyanat, Cyclohexylen-1,2-diisocyanat, Hexahydroxylylendiisocyanat, Dicyclohexyl-4,4-diisocyanat, 1-Methyl-2,4-diisocyanatocyclohexan, 1-Methyl-2,6-diisocyanatocyclohexan, bis-(4-Isocyanatocyclohexyl)methan, 1,4-Diisocyanatocyclohexan und 1,3-Diisocyanatocyclohexan besteht.

5. Polyurethanharz-Zusammensetzung nach Anspruch 1, wobei es sich bei dem Biuret-Körper um 1,3,5-tris-(6-Isocyanatohexyl)biuret handelt.

6. Polyurethanharz-Zusammensetzung nach Anspruch 1, wobei dem Reaktionsansatz ein zweiter Weichmacher zugesetzt wird, um das Klebstoffharz zu erhalten.

7. Polyurethanharz-Zusammensetzung nach Anspruch 1, wobei sie weiterhin aus der Gruppe, welche aus einem Pigment, einem Katalysator und einem Haftvermittler besteht, eines/einen oder mehrere umfasst.

8. Polyurethanharz-Zusammensetzung nach Anspruch 7, wobei es sich bei dem Katalysator um einen oder mehrere handelt, der/die aus der Gruppe ausgewählt ist/sind, welche aus Dimethylzinndioleat, Dibutylzinndimaleat, Dibutylzinndilaurat, Dibutylzinndiacetat, Dibutylzinnoctanoat, Dibutylzinnmercaptid, Dioctylzinndilaurat, Dioctylzinnmercaptid, Dioctylzinndimaleat, 4,4'-(Oxydi-2,1-ethandyl)bismorpholin und Dimethyl-4-morpholinethanamin besteht.

9. Polyurethanharz-Zusammensetzung nach Anspruch 7,
wobei diese, bezogen auf 100 Gewichtsteile der Polyurethanharz-Zusammensetzung,
25 bis 70 Gewichtsteile des Urethanharzes;
9 bis 20 Gewichtsteile des Klebstoffharzes;
3 bis 15 Gewichtsteile des ersten Weichmachers;
20 bis 35 Gewichtsteile des Pigments;
0,001 bis 0,5 Gewichtsteile des Katalysators; und
0,1 bis 1 Gewichtsteile des Haftvermittlers beinhaltet.

## Revendications

1. Composition de résine de polyuréthane, comprenant :
une résine d'uréthane ;
une résine adhésive obtenue par réaction d'un composé à base d'aminoalcoxysilane et d'un corps de biuret lié avec de l'isocyanate ; et
un premier plastifiant, dans laquelle
dans la réaction, le composé à base d'aminoalcoxysilane est inclus dans 5 à 8 parties en poids sur la base de 100 parties en poids de la composition de résine de polyuréthane.

2. Composition de résine de polyuréthane selon la revendication 1, dans laquelle le composé à base d'aminoalcoxysilane est un ou plusieurs choisis dans le groupe constitué par la bis(trialcoxysilylpropyl)amine, le N-2-(aminoéthyl)-3-aminopropylméthyldiméthoxysilane, le N-2-(aminoéthyl)-3-aminopropyltriméthoxysilane, le 3-aminopropyltriéthoxysilane, l'aminopropyltriméthoxysilane, le 3-aminopropyltriméthoxysilane, le N-phényl-3-N-phényl-gamma-aminopropyltriméthoxysilane et le 3-aminopropyltriéthoxysilane.

3. Composition de résine de polyuréthane selon la revendication 2, dans laquelle la bis(trialcoxysilylpropyl)amine est une ou plusieurs choisies dans le groupe consistant en bis(triméthoxysilylpropyl)amine, bis(triéthoxysilylpropyl)amine et bis(tripropoxysilylpropyl)amine.

4. Composition de résine de polyuréthane selon la revendication 1, dans laquelle l'isocyanate lié au corps de biuret inclut un ou plusieurs choisis dans le groupe consistant en diisocyanate d'hexaméthylène, cyclopentylène-1,3-diisocyanate, cyclohexylène-1,2-diisocyanate, diisocyanate d'hexahydroxylylène, dicyclohexyl-4,4-diisocyanate, 1-méthyl-2,4-diisocyanatocyclohexane, 1-méthyl-2,6-diisocyanatocyclohexane, bis(4-isocyanatocyclohexyl)méthane, 1,4-diisocyanatocyclohexane et 1,3-diisocyanatocyclohexane.

5. Composition de résine de polyuréthane selon la revendication 1, dans laquelle le corps de biuret est un 1,3,5-tris(6-isocyanatohexyl)biuret.

6. Composition de résine de polyuréthane selon la revendication 1, dans laquelle un second plastifiant est ajouté à la réaction pour obtenir la résine adhésive.

7. Composition de résine de polyuréthane selon la revendication 1, comprenant en outre un ou plusieurs choisis dans le groupe constitué d'un pigment, d'un catalyseur et d'un promoteur d'adhérence.

8. Composition de résine de polyuréthane selon la revendication 7, dans laquelle le catalyseur est un ou plusieurs choisis dans le groupe consistant en le dioléate de diméthylétain, le dimaléate de dibutylétain, le dilaurate de dibutylétain, le diacétate de dibutylétain, l'octanoate de dibutylétain, le mercaptide de dibutylétain, le dilaurate de dioctylétain, le mercaptide de dioctylétain, le dimaléate de dioctylétain, la 4,4'-(oxydi-2,1-éthanedyl)bismorpholine et la diméthyl-4-morpholine éthaneamine.

9. Composition de résine de polyuréthane selon la revendication 7,
dans laquelle, sur la base de 100 parties en poids de la composition de résine de polyuréthane,
de 25 à 70 parties en poids de la résine d'uréthane ;
de 9 à 20 parties en poids de la résine adhésive ;
de 3 à 15 parties en poids du premier plastifiant ;
de 20 à 35 parties en poids du pigment ;
de 0,001 à 0,5 parties en poids du catalyseur ; et
de 0,1 à 1 partie en poids du promoteur d'adhérence sont incluses.
